(19) Europäisches Patentamt / European Patent Office / Office européen des brevets

(11) **EP 3 968 622 A1**

(12) **EUROPEAN PATENT APPLICATION**
published in accordance with Art. 153(4) EPC

(43) Date of publication:
**16.03.2022 Bulletin 2022/11**

(21) Application number: **20839950.1**

(22) Date of filing: **27.03.2020**

(51) Int Cl.:
***H04N 5/225*** (2006.01)

(86) International application number:
**PCT/CN2020/081851**

(87) International publication number:
**WO 2021/008169 (21.01.2021 Gazette 2021/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.07.2019 CN 201910636878**
**29.10.2019 CN 201911040420**

(71) Applicant: **Huawei Technologies Co., Ltd.**
**Longgang District**
**Shenzhen,**
**Guangdong 518129 (CN)**

(72) Inventors:
- **YUAN, Ting**
  **Shenzhen, Guangdong 518129 (CN)**
- **ZHANG, Haiyang**
  **Shenzhen, Guangdong 518129 (CN)**
- **LUO, Shuizhen**
  **Shenzhen, Guangdong 518129 (CN)**
- **LI, Mingxuan**
  **Shenzhen, Guangdong 518129 (CN)**
- **KONG, Yajun**
  **Shenzhen, Guangdong 518129 (CN)**

(74) Representative: **Kreuz, Georg Maria**
**Huawei Technologies Duesseldorf GmbH**
**Riesstraße 25**
**80992 München (DE)**

(54) **PHOTOGRAPHING APPARATUS AND METHOD, AND ADJUSTMENT ELEMENT**

(57) This application discloses a shooting apparatus and method, and an adjustment element, and pertains to the field of shooting technologies. The apparatus includes: a lens barrel, a lens, an anti-jitter element, an anti-jitter element adjustment apparatus, and a photosensitive element. The lens is disposed at a first end in an axial direction of the lens barrel, and the photosensitive element is disposed at a second end. The anti-jitter element is located between the lens and the photosensitive element, the anti-jitter element and the lens are coaxially disposed, the anti-jitter element has no focal power and is connected to an inner wall of the lens barrel through the anti-jitter element adjustment apparatus, and the anti-jitter element adjustment apparatus is configured to adjust a pose of the anti-jitter element. In this application, the anti-jitter element adjustment apparatus drives, based on target adjustment data, the anti-jitter element to perform pose adjustment, so that jitter of the shooting apparatus can be compensated for. In this way, an image shot when the shooting apparatus jitters is relatively clear, and a shooting effect is good. In addition, because the anti-jitter element has no focal power, the anti-jitter element can adapt to a plurality of types of lenses, and has a relatively wide application scope.

FIG. 4

**Description**

**TECHNICAL FIELD**

This application relates to the field of shooting technologies, and in particular, to a shooting apparatus and method, and an adjustment element.

**BACKGROUND**

With development of shooting technologies, a shooting apparatus is widely used in people's life. In a process of shooting through the shooting apparatus, the shooting apparatus may jitter because of vibration force and external force that are generated due to operation of an internal element of the apparatus. Consequently, an edge of a shot image is blurred and definition is relatively low. Therefore, it is necessary to provide a shooting apparatus, to improve a shooting effect of the shooting apparatus.

A related technology provides a shooting apparatus, and the apparatus includes a housing, a lens, a photosensitive element, and a photosensitive element adjustment apparatus. An inside of the housing is a cavity, and the lens is disposed at an unclosed end of the housing. The photosensitive element is fastened to the cavity inside the housing through the photosensitive element adjustment apparatus. When the apparatus jitters in a shooting process, the photosensitive element adjustment apparatus adjusts a position of the photosensitive element based on jitter information of the apparatus, so that an image formed by light rays on the photosensitive element is relatively clear. In other words, the jitter of the shooting apparatus is offset by adjusting the photosensitive element, and anti-jitter shooting is implemented.

However, the photosensitive element is a fine element. Therefore, the adjustment performed on the photosensitive element affects a service life of the photosensitive element, and further affects a service life of the shooting apparatus. This reduces user experience of the shooting apparatus.

**SUMMARY**

Embodiments of this application provide a shooting apparatus and method, and an adjustment element, to resolve a problem in a related technology. Technical solutions are as follows.

According to a first aspect, a shooting apparatus is provided, where the apparatus includes: a lens barrel, a lens, an anti-jitter element, an anti-jitter element adjustment apparatus, and a photosensitive element.

The lens is disposed at a first end in an axial direction of the lens barrel, and the photosensitive element is disposed at a second end.

the anti-jitter element is located between the lens and the photosensitive element, the anti-jitter element and the lens are coaxially disposed, the anti-jitter element has no focal power and is connected to an inner wall of the lens barrel through the anti-jitter element adjustment apparatus, and the anti-jitter element adjustment apparatus is configured to adjust a pose of the anti-jitter element.

In an example embodiment, the anti-jitter element is a planar lens with an equal thickness.

In an example embodiment, the anti-jitter element adjustment apparatus includes an actuator, the actuator is configured to drive the planar lens to rotate around an X axis and/or a Y axis, the X axis is perpendicular to an optical axis of the lens, and the Y axis is perpendicular to the X axis and the optical axis.

In an example embodiment, there are two pairs of actuators, when a cross section of the planar lens in a radial direction is a rectangle, each actuator in the two pairs of actuators is disposed at a midpoint of each side of the planar lens; or

each actuator in the two pairs of actuators is disposed at each corner of the planar lens.
when the cross section of the planar lens in the radial direction is a circle, each pair of actuators in the two pairs of actuators are disposed respectively at intersection points of a diameter of the circle and an edge of the circle, and diameters on which the two pairs of actuators are located are perpendicular to each other.

In an example embodiment, the anti-jitter element adjustment apparatus includes: a first rotation frame, a second rotation frame, and a third fastening frame, the first rotation frame, the second rotation frame, and the third fastening frame are configured to drive the planar lens to rotate around an X axis and/or an Y axis, the X axis is perpendicular to an optical axis of the lens, and the Y axis is perpendicular to the X axis and the optical axis.

The first rotation frame is sleeved on an outer wall of the planar lens in a radial direction in a fastening manner, an outer wall of the first rotation frame in the radial direction has a protrusion component, and the first rotation frame is movably connected to the inside of the second rotation frame through the first protrusion component.

An outer wall of the second rotation frame in the radial direction has a second protrusion component, a straight line on which the second protrusion component is located and a straight line on which the first protrusion component is located are perpendicular to each other, and the second rotation frame is movably connected to the inside of the third fastening frame through the second protrusion component.

In an example embodiment, the apparatus further includes a fastener.

The fastener is perpendicularly connected to the inner wall of the lens barrel, a size of the fastener matches a size of the anti-jitter element, and a second end of the anti-jitter element adjustment apparatus is perpendicularly connected to any end in an axial direction of the fastener, and is then connected to the lens barrel through the fastener.

In an example embodiment, the anti-jitter element is two wedge-shaped lenses whose inclined planes are disposed opposite to each other.

In an example embodiment, the anti-jitter element adjustment apparatus includes a voice coil motor, and the voice coil motor is configured to drive at least one wedge-shaped lens of the two wedge-shaped lenses to move in an optical axis of the lens, and drive the two wedge-shaped lenses to rotate in the optical axis.

In an example embodiment, the anti-jitter element adjustment apparatus includes at least one actuator, and the at least one actuator is configured to drive at least one wedge-shaped lens of the two wedge-shaped lenses to move in the optical axis; and

a track used to drive, by using the at least one actuator, the two wedge-shaped lenses to rotate in the optical axis is disposed on the inner wall of the lens barrel.

In an example embodiment, the anti-jitter element adjustment apparatus includes at least two actuators, and the at least two actuators are configured to drive at least one wedge-shaped lens of the two wedge-shaped lenses to move in the optical axis.

The shooting apparatus further includes the fastener perpendicularly connected to the inner wall of the lens barrel, and a track used to drive, by using the at least two actuators, the anti-jitter element to rotate in the optical axis is disposed on the fastener.

In an example embodiment, the apparatus further includes a fastening frame.

The fastening frame is sleeved on an outer wall of the anti-jitter element in a radial direction, and is configured to fasten the anti-jitter element.

In an example embodiment, the apparatus further includes a shooting adjustment element, the shooting adjustment element is electrically connected to the anti-jitter element adjustment apparatus, and the shooting adjustment element is configured to: obtain measurement data, determine target adjustment data of the anti-jitter element based on the measurement data, and control the anti-jitter element adjustment apparatus to adjust the pose of the anti-jitter element based on the target adjustment data.

According to one aspect, a shooting method is provided, where the method is applied to any possible shooting apparatus provided in the embodiments, and the method includes:

obtaining jitter data and a jitter direction of the shooting apparatus;
determining target adjustment data of an anti-jitter element based on the jitter data and the jitter direction; and
controlling, based on the target adjustment data, an anti-jitter element adjustment apparatus to drive the anti-jitter element to change a pose, to complete shooting.

In an example embodiment, the obtaining jitter data and a jitter direction of the shooting apparatus includes:

continuously detecting the shooting apparatus by using a gyroscope, and obtaining a jitter amount and the jitter direction of the shooting apparatus; and
determining the jitter data of the shooting apparatus based on the jitter amount.

In an example embodiment, the anti-jitter element is a planar lens with an equal thickness, and the target adjustment data includes a rotation angle and a rotation direction of the plate;
the determining target adjustment data of an anti-jitter element based on the jitter data and the jitter direction includes:

determining the rotation angle based on the jitter data according to the following formula:

$$\omega = \frac{\Delta s}{d} \times \frac{n}{n-1},$$

where
$\Delta s$ represents the jitter data, n represents a refractive index of the planar lens, d represents the thickness of the planar lens, and w represents the rotation angle; and
determining the rotation direction based on the jitter direction.

In an example embodiment, the anti-jitter element is two wedge-shaped lenses whose inclined planes are disposed opposite to each other, and the target adjustment data includes a spacing between the two wedge-shaped lenses, a rotation angle, and a rotation direction;
the determining target adjustment data of an anti-jitter element based on the jitter data and the jitter direction includes:

determining the spacing between the two wedge-shaped lenses based on the jitter data according to the following formula:

$$L = \frac{\Delta s}{(n-1)x\alpha},$$

where
$\Delta s$ represents the jitter data, n represents a refractive index of any wedge-shaped lens, $\alpha$ represents an included angle between a vertical plane and an inclined plane of any wedge-shaped lens, and L represents the spacing between the two wedge-shaped lenses; and
determining the rotation angle and the rotation direction based on the jitter direction.

According to another aspect, a shooting adjustment element is provided, where the shooting adjustment element is applied to any possible shooting apparatus provided in the embodiments, and the shooting adjustment element includes:

an obtaining module, configured to obtain jitter data and a jitter direction of the shooting apparatus;
a determining module, configured to determine target adjustment data of an anti-jitter element based on the jitter data and the jitter direction; and
a control module, configured to control, based on the target adjustment data, an anti-jitter element adjustment apparatus to drive the anti-jitter element to change a pose, to complete shooting.

In an example embodiment, the obtaining module is configured to: continuously detect the shooting apparatus by using a gyroscope; obtain a jitter amount and the jitter direction of the shooting apparatus; and determine the jitter data of the shooting apparatus based on the jitter amount.

In an example embodiment, the anti-jitter element is a planar lens with an equal thickness, and the target adjustment data includes a rotation angle and a rotation direction of the plate;

the determining module is configured to determine, based on the jitter data, the rotation angle according to the following formula:

$$\omega = \frac{\Delta s}{d} x \frac{n}{n-1},$$

where
$\Delta s$ represents the jitter data, n represents a refractive index of the planar lens, d represents the thickness of the planar lens, and w represents the rotation angle; and
the determining module is configured to determine the rotation direction based on the jitter direction.

In an example embodiment, the anti-jitter element is two wedge-shaped lenses whose inclined planes are disposed opposite to each other, and the target adjustment data includes a spacing between the two wedge-shaped lenses, a rotation angle, and a rotation direction;

the determining module is configured to determine the spacing between the two wedge-shaped lenses based on the jitter data according to the following formula:

$$L = \frac{\Delta s}{(n-1)x\alpha},$$

where
$\Delta s$ represents the jitter data, n represents a refractive index of any wedge-shaped lens, $\alpha$ represents an included angle between a vertical plane and an inclined plane of any wedge-shaped lens, and L represents the spacing between the two wedge-shaped lenses; and
the determining module is configured to determine the rotation angle and the rotation direction based on the jitter direction.

Beneficial effects brought by the technical solutions provided in the embodiments of this application include at least the following.

In this embodiment, the anti-jitter element adjustment apparatus drives, based on the target adjustment data, the anti-jitter element to perform pose adjustment, so that the jitter of the shooting apparatus can be compensated for. In this way, an image or a video shot when the shooting apparatus jitters is relatively clear, and a shooting effect is good. Because the anti-jitter element has no focal power, a quantity of lenses in the shooting apparatus is reduced, so that a weight and costs of the anti-jitter element are reduced. In addition, the anti-jitter element can adapt to a plurality of types of lenses, a design and production period of the shooting apparatus is shortened, and universality of the shooting apparatus is improved.

## BRIEF DESCRIPTION OF DRAWINGS

FIG. 1 is a schematic diagram of a structure of a shooting apparatus in a related technology according to an embodiment of this application;
FIG. 2 is a schematic diagram of a photosensitive element in a related technology according to an embodiment of this application;
FIG. 3 is a schematic diagram of a structure of a shooting apparatus in a related technology according to an embodiment of this application;
FIG. 4 is a diagram of a structure of a shooting apparatus according to an embodiment of this application;
FIG. 5 is a schematic diagram of a structure of a lens according to an embodiment of this application;
FIG. 6 is a schematic diagram of a structure of a shooting apparatus including a planar lens according to an embodiment of this application;
FIG. 7 is a schematic diagram of a structure of a shooting apparatus including a wedge-shaped lens according to an embodiment of this application;
FIG. 8 is a schematic diagram of a structure of a planar lens according to an embodiment of this application;
FIG. 9 is a schematic diagram of a structure of a rotating shaft actuator according to an embodiment of this application;
FIG. 10 is a schematic diagram of a structure of a planar lens according to an embodiment of this application;
FIG. 11 is a schematic diagram of a structure of a shooting apparatus including a fastener according to an embodiment of this application;
FIG. 12 is a schematic diagram of a structure of a shooting apparatus according to an embodiment of this application;
FIG. 13 is a schematic diagram of a structure of a shooting apparatus according to an embodiment of this application;
FIG. 14 is a schematic diagram of a structure of a shooting apparatus according to an embodiment of this application;
FIG. 15 is a schematic diagram of a structure of a shooting apparatus according to an embodiment of this application;
FIG. 16 is a schematic three-dimensional diagram of a voice coil motor according to an embodiment of this application;
FIG. 17 is a sectional view of a voice coil motor according to an embodiment of this application;
FIG. 18 is a sectional view of a voice coil motor according to an embodiment of this application;
FIG. 19 is a schematic diagram of a structure of a fastening frame according to an embodiment of this application;
FIG. 20 is a schematic diagram of an architecture of a shooting apparatus according to an embodiment of this application;
FIG. 21 is a flowchart of a shooting method according to an embodiment of this application;
FIG. 22 is a schematic diagram of imaging according to an embodiment of this application;
FIG. 23 is a schematic diagram of jitter according to an embodiment of this application;
FIG. 24 is a diagram of data comparison according to an embodiment of this application;
FIG. 25 is a schematic diagram of rotation of a planar lens according to an embodiment of this application;
FIG. 26 is a schematic diagram of movement of a wedge-shaped lens according to an embodiment of this application;
FIG. 27 is a schematic diagram of an architecture of an optical image stabilization system according to an embodiment of this application;
FIG. 28 is a working flowchart of an optical image stabilization system according to an embodiment of this application; and
FIG. 29 is a schematic diagram of a structure of a shooting adjustment element according to an embodiment of this application.

**DESCRIPTION OF EMBODIMENTS**

Terms used in embodiments of this application are merely used to explain specific embodiments of this application, but are not intended to limit this application.

With development of shooting technologies, there are more and more types of shooting apparatuses, for example, a mobile phone camera, a software defined camera (software defined camera, SDC), and a digital camera. In a process of shooting through the shooting apparatus, the shooting apparatus may jitter because of vibration force and external force that are generated due to operation of an internal element of the apparatus. Consequently, an edge of a shot image or video is blurred and definition is relatively low.

An SDC commonly used in a surveillance scenario is used as an example. In the surveillance scenario, the SDC at a target place performs shooting, and transmits a shot image or video to a server through a network, so that a user can obtain the image or video from the server and observe the image or video, to implement surveillance on the target place. When the SDC is used for shooting, the SDC may be subject to vibration force generated by elements such as a fan and a belt pulley inside the SDC. If the target place is an outdoor place such as a bridge, a tower, or the sea, the SDC may be subject to external force such as wind force. Consequently, jitter occurs under an effect of the vibration force and the external force, and an edge of the shot image or video is blurred. Therefore, if a human eye observes the image or video, blurring of the edge of the image or video accelerates generation of a sense of fatigue of the human eye. This affects an observation and a surveillance effect. If the image or video is analyzed through a target recognition and tracking system, the blurring of the edge affects recognition accuracy and reduces a tracking capability. In addition, for the mobile phone camera and the digital video camera, corresponding jitter is usually caused by hand jitter of a user who holds a mobile phone, and consequently, a shooting effect is relatively poor. Therefore, it is necessary to provide a shooting apparatus, to improve a shooting effect of the shooting apparatus.

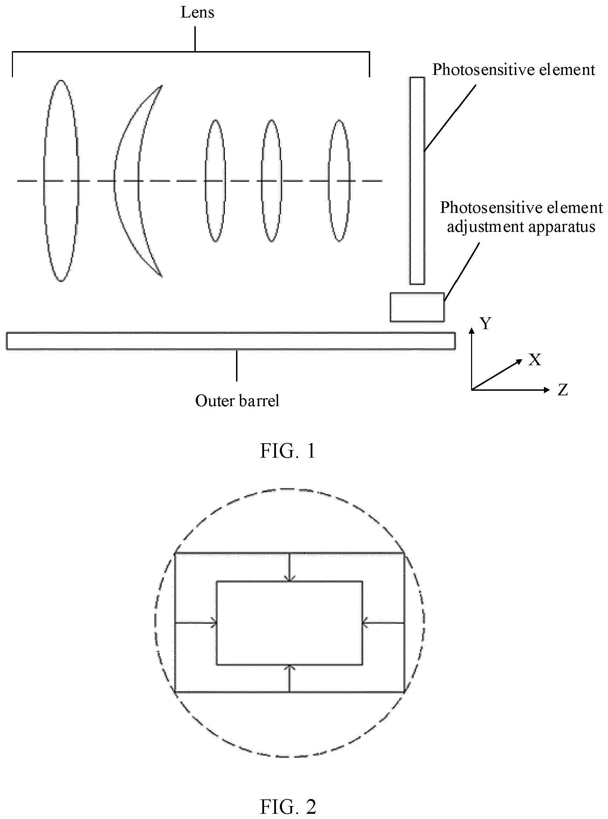

A related technology 1 provides a shooting apparatus. As shown in FIG. 1, the apparatus includes a housing, a lens, a photosensitive element, and a photosensitive element adjustment apparatus. An inside of the housing is a cavity, and the lens is disposed at an unclosed end of the housing. The photosensitive element is fastened to the cavity inside the housing through the photosensitive element adjustment apparatus. When the apparatus jitters in a shooting process, the photosensitive element adjustment apparatus adjusts the photosensitive element based on jitter information of the apparatus, so that an image formed by light rays on the photosensitive element is relatively clear. In other words, the jitter of the shooting apparatus is offset by adjusting the photosensitive element, and anti-jitter shooting is implemented.

However, the shooting apparatus provided in the related technology 1 has at least the following technical problems.

Technical problem 1: The photosensitive element includes a photosensitive chip (sensor) and a hard circuit board. Because the photosensitive chip is a heat emitting element, a heat dissipation apparatus needs to be correspondingly disposed. If a position of the photosensitive chip can be adjusted by the photosensitive element adjustment apparatus, it is relatively difficult to dispose the heat dissipation apparatus, and manufacturing costs of the shooting apparatus are increased.

Technical problem 2: The photosensitive element is connected to another component in the shooting apparatus through a flexible printed circuit (flexible printed circuit, FPC). Therefore, adjustment on the photosensitive element also drives the FPC to move, and consequently, the FPC is continuously bent, a service life of the FPC is shortened, a service life of the shooting apparatus is affected, and use experience of the shooting apparatus is reduced.

Technical problem 3: Referring to FIG. 2, a larger rectangle is the photosensitive chip that is not adjusted, and a circumscribed circle of the larger rectangle is a lens field of view. It can be seen that when the photosensitive element is not adjusted, an actual used area of the photosensitive chip is equal to a relatively large rectangular area in FIG. 2. However, when the photosensitive element is adjusted, the actual used area of the photosensitive chip is reduced to a smaller rectangular frame in FIG. 2. Therefore, the adjustment on the photosensitive element may reduce the actual use area of the photosensitive chip.

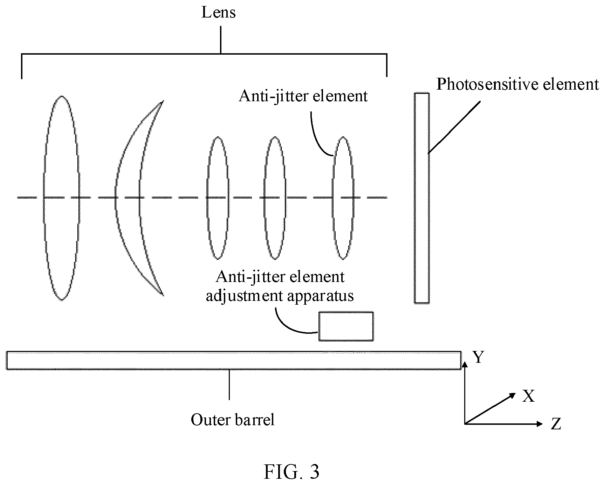

A related technology 2 provides a shooting apparatus. As shown in FIG. 3, the apparatus includes a housing, a lens, an anti-jitter element having focal power, an anti-jitter element adjustment apparatus, and a photosensitive element. The lens and the photosensitive element are respectively disposed at two ends of the housing, and the anti-jitter element having the focal power is located between the lens and the photosensitive element. In a shooting process, the anti-jitter element adjustment apparatus drives the anti-jitter element having the focal power to move in a direction perpendicular to an optical axis of the lens, to offset jitter of the shooting apparatus, and complete anti-jitter shooting.

The related technology 2 has at least the following technical problems.

Technical problem 1: Because the anti-jitter element has the focal power, when participating in focal power allocation and aberration correction in lens design, the anti-jitter element needs to be coupled to the lens, so that light beams collected by the lens can be imaged on the photosensitive element after passing through the anti-jitter element. In other words, one anti-jitter element is adapted to only one lens, and anti-jitter elements adapted to different lenses need to be separately designed. It can be seen that, in the related technology 2, the shooting apparatus has poor universality and a relatively small application scope.

Technical problem 2: During anti-jitter shooting, the anti-jitter element having the focal power moves in the direction perpendicular to the optical axis of the lens. Therefore, a quantity of lenses needs to be increased for the aberration correction, to ensure that imaging quality meets a requirement. Therefore, the quantity of lenses of the shooting apparatus is increased, difficulty and costs of design, processing, and manufacturing are increased, and imaging performance of the shooting apparatus is reduced.

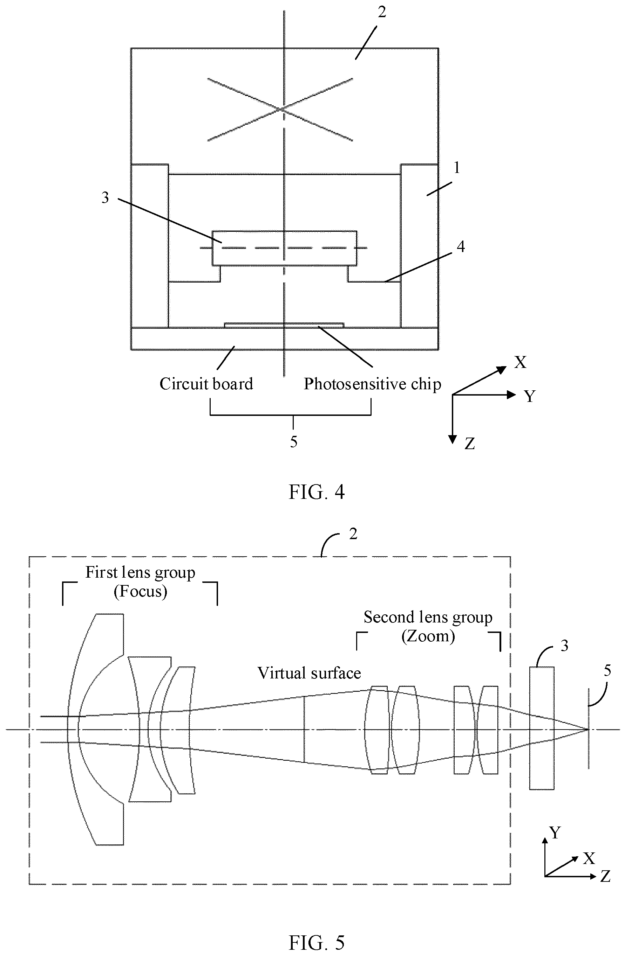

An embodiment of this application provides a shooting apparatus. Referring to FIG. 4, the apparatus includes a lens barrel 1, a lens 2, an anti-jitter element 3, an anti-jitter element adjustment apparatus 4, and a photosensitive element 5. The lens 2 is disposed at a first end in an axial direction of the lens barrel 1, and the photosensitive element 5 is disposed at a second end in the axial direction. The anti-jitter element 3 is located between the lens 2 and the photosensitive element 5, the anti-jitter element 3 and the lens 2 are coaxially disposed, the anti-jitter element 3 has no focal power and is connected to an inner wall of the lens barrel 1 through the anti-jitter element adjustment apparatus 4, and the anti-jitter element adjustment apparatus 4 is configured to adjust a pose of the anti-jitter element 3.

The lens 2 may be one or more lens groups, and each lens group includes one or more lenses. By changing a distance between lenses or lens groups, focusing and zooming may be performed based on a shot object, to facilitate shooting. For example, referring to FIG. 5, the lens 2 includes, in the axial direction, a first lens group having negative refractive power and a second lens group having positive refractive power. A virtual surface (virtual surface) is formed between the first lens group and the second lens group. The first lens group is a compensation group, and objects with different distances may be focused (focus) by changing an axial spacing between the first lens group and the virtual surface. The second lens group is a zoom group, and a focal length of the lens 2 is changed by changing an axial spacing between the virtual surface and the second lens group, to implement zooming (zoom).

During shooting, the lens 2 may collect light rays reflected by the shot object, to form an object image. The lens 2 is disposed at the first end in the axial direction of the lens barrel 1, the photosensitive element 5 is disposed at the second end in the axial direction, and the anti-jitter element 3 is located between the lens 2 and the photosensitive element 5. In other words, the lens 2, the anti-jitter element 3, and the photosensitive element 5 are sequentially disposed in the axial direction. The light rays collected by the lens 2 pass through the anti-jitter element 3 and fall on the photosensitive element 5, so that the object image is formed on the photosensitive element 5.

It should be noted that sufficient space needs to be reserved between the lens 2 and the photosensitive element 5, so that the anti-jitter element adjustment apparatus 4 adjusts the anti-jitter element 3. A size of the space may be determined based on a size of the anti-jitter element 3 and a variation of the pose of the anti-jitter element 3. This is not limited in this embodiment.

In addition, the photosensitive element 5 includes a photosensitive chip and a circuit board that are connected. The photosensitive chip is configured to convert an optical signal into an electrical signal, and the circuit board is configured to store and transmit the electrical signal, to form the object image. In addition, if an end, of the circuit board, connected to the photosensitive chip faces the lens 2, the anti-jitter element 3 is located between the lens 2 and the photosensitive chip included in the photosensitive element 5. In this embodiment, the circuit board includes but is not limited to a hard circuit board. The photosensitive chip and the circuit board may be connected through wire bonding, or may further be fastened through glue dispensing on the basis of the wire bonding, to implement the connection.

The circuit board included in the photosensitive element 5 is disposed at the second end in the axial direction of the lens barrel 1. Therefore, the second end in the axial direction of the lens barrel 1 needs to have an interface matching the circuit board, to connect and fasten the circuit board. Correspondingly, an interface provided at the first end in the axial direction the lens barrel 1 may be disposed based on the lens 2, so that the lens barrel 1 is adapted to a plurality of lens 2 of different models.

If the apparatus jitters in a shooting process, the anti-jitter element adjustment apparatus 4 adjusts a pose of the anti-jitter element 3, to obtain an anti-jitter element after the pose adjustment. In this case, a propagation direction changes when the light rays pass through the adjusted anti-jitter element, and a position on which the light rays whose propagation direction is changed fall on the photosensitive element 5 is different from a position on which the light rays fall on the photosensitive element 5 when the anti-jitter element 3 is not adjusted. Therefore, an imaging position on the photosensitive element 5 is changed, so that an edge of a shot image is clear, definition is relatively high, and jitter compensation of the apparatus is implemented.

It should be noted that, the adjusting the pose of the anti-jitter element 3 refers to adjusting at least one of a position or a posture of the anti-jitter element 3. Adjusting the position of the anti-jitter element 3 refers to adjusting a spacing between the anti-jitter element 3 and the lens 2 (or the photosensitive element 5) in the axial direction, and does not change a distance between the anti-jitter element 3 and the inner wall of the lens barrel 1 in a radial direction. Adjusting the posture of the anti-jitter element 3 refers to rotating the anti-jitter element 3 around at least one of an X axis, a Y axis, and a Z axis shown in FIG. 4.

It can be seen that, in this embodiment, jitter of the shooting apparatus can be compensated for without dragging the photosensitive element. Therefore, compared with the related technology 1, the shooting apparatus provided in this embodiment has relatively low manufacturing costs and a relatively long service life. In addition, because the anti-jitter element does not have the focal power, the anti-jitter element does not converge or spread the light rays collected by the lens, but only changes the propagation direction of the light rays collected by the lens to implement jitter compensation. Therefore, compared with the related technology 2, the anti-jitter element without the focal power in this embodiment can adapt to lenses of a plurality of different attributes or models, has relatively high universality, and has a wide application scope.

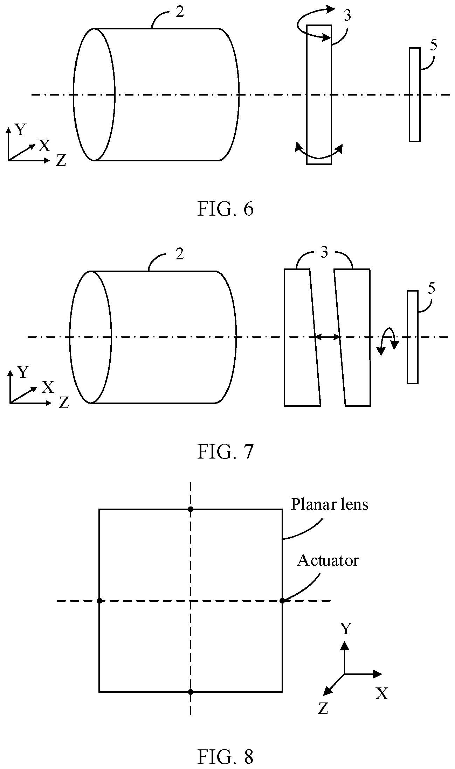

In an optional implementation, the anti-jitter element 3 without the focal power may be a planar lens with an equal thickness shown in FIG. 6, or may be two wedge-shaped lenses whose inclined planes are disposed opposite to each other shown in FIG. 7. Compared with processing a glass material into a spherical anti-jitter element with the focal power, processing the glass material into the planar lens or the wedge-shaped lens in this embodiment requires relatively low costs. This reduces a quantity of lenses in the shooting apparatus and improves imaging quality. The following separately describes the planar lens and two wedge-shaped lenses.

When the anti-jitter element 3 is the planar lens with an equal thickness, optionally, the anti-jitter element adjustment apparatus 4 includes an actuator, and the actuator is configured to drive the planar lens to rotate around the X axis and/or the Y axis. The X axis is perpendicular to an optical axis of the lens 2, and the Y axis is perpendicular to the X axis and the optical axis. Still referring to FIG. 6 and FIG. 7, a coordinate system including the X axis and the Y axis may be defined as follows: The optical axis of the lens 2 is a Z axis, the X axis is perpendicular to a paper plane, and a direction that is perpendicular to the paper plane and that is inward is a positive direction of the X axis. Then, the Y axis and a positive direction of the Y axis may be obtained based on a right-hand coordinate system.

Optionally, there may be two pairs of actuators, and for planar lenses of different shapes, positions at which the two pairs of actuators are disposed are also different. When a cross section of the planar lens in the radial direction is a rectangle, referring to FIG. 8, each actuator in the two pairs of actuators may be disposed at a midpoint of each side of the planar lens. In other words, one pair of actuators are disposed on the X axis (the two actuators are respectively located in the positive direction and a negative direction of the X axis). The other pair of actuators are disposed on the Y axis (the two actuators are respectively located in the positive direction and a negative direction of the Y axis).

The actuator may be disposed at the midpoint of each side of the planar lens in the axial direction. In this case, an axial spacing between the actuator and the lens 2 may be greater than an axial spacing between the planar lens and the lens 2, or may be less than an axial spacing between the planar lens and the lens 2. Each actuator includes a telescopic end and a non-telescopic end, the telescopic end is connected to the anti-jitter element 3, and the non-telescopic end is connected to the inner wall of the lens barrel 1. Therefore, controlling each actuator to perform different degrees of telescoping may drive the planar lens to rotate around the X axis and/or the Y axis.

It should be noted that, for any one of the X axis, the Y axis, and the Z axis, a manner in which the planar lens rotates around the axis includes clockwise rotation or counterclockwise rotation around the axis. In addition, an observation direction of the clockwise or counterclockwise rotation is from a negative direction of the axis to a positive direction of the axis. For example, in an observation direction from the negative direction of the X axis to the positive direction of the X axis, if the planar lens rotates clockwise, it indicates that the planar lens rotates clockwise around the X axis. For rotation around any axis involved in the following, refer to the foregoing description.

Further, in an example in which the axial spacing between the actuator and the lens 2 is greater than the axial spacing between the planar lens and the lens 2, a manner of controlling the actuator to be telescoped includes the following four cases.

In a first case, if the actuator drives the planar lens to rotate clockwise around the X axis, the pair of actuators disposed on the X axis are controlled not to be telescoped, an actuator disposed in the positive direction of the Y axis is shortened, and an actuator disposed in the negative direction of the Y axis is elongated. Alternatively, an elongation amount of the pair of actuators disposed on the X axis is controlled to be a first elongation amount, an elongation amount of the actuator disposed in the positive direction of the Y axis is less than the first elongation amount, and an elongation amount of the actuator disposed in the negative direction of the Y axis is greater than the first elongation amount. Alternatively, a shortening amount of the pair of actuators disposed on the X axis is a first shortening amount, a shortening amount of the actuator disposed in the positive direction of the Y axis is greater than the first shortening amount, and a shortening amount of the actuator disposed in the negative direction of the Y axis is less than the first shortening amount.

In a second case, if the actuator drives the planar lens to rotate counterclockwise around the X axis, telescopic manners of the two actuators in the pair of actuators disposed on the Y axis in the first case may be exchanged. Details are not described herein again.

In a third case, if the actuator drives the planar lens to rotate clockwise around the Y axis, the pair of actuators disposed on the Y axis are controlled not to be telescoped, an actuator disposed in the positive direction of the X axis is elongated, and an actuator disposed in the negative direction of the X axis is shortened. Alternatively, an elongation amount of the pair of actuators disposed on the Y axis is controlled to be a first elongation amount, an elongation amount of the actuator disposed in the positive direction of the X axis is greater than the first elongation amount, and an elongation amount of the actuator disposed in the negative direction of the X axis is less than the first elongation amount. Alternatively, a shortening amount of the pair of actuators disposed on the Y axis is a first shortening amount, a shortening amount of the actuator disposed in the positive direction of the X axis is less than the first shortening amount, and a shortening amount of the actuator disposed in the negative direction of the X axis is greater than the first shortening amount.

In a fourth case, if the actuator drives the planar lens to rotate counterclockwise around the Y axis, telescopic manners of the two actuators in the pair of actuators disposed on the X axis in the third case may be exchanged. Details are not described herein again.

A shape of the actuator is not limited in this embodiment, provided that the actuator has at least one telescopic end, can fasten the anti-jitter element 3 on the inner wall of the lens barrel 1, and can drive the anti-jitter element 3 to rotate around the X axis and/or the Y axis. For example, the actuator may be an L-shaped actuator, an arc-shaped actuator, or another special-shaped actuator.

Alternatively, when the cross section of the planar lens in the radial direction is a rectangle, each of the two pairs of actuators may be disposed at each corner of the planar lens. Each actuator may be disposed at a corner in an axial direction of the planar lens. For ease of description, four actuators are described by using quadrants in a two-dimensional coordinate system formed by the X axis and the Y axis. In this case, the four actuators are respectively located in a first quadrant, a second quadrant, a third quadrant, and a fourth quadrant, and the telescopic end of the actuator is still connected to the anti-jitter element 3.

That the axial spacing between the actuator and the lens 2 is greater than the axial spacing between the planar lens and the lens 2 is still used as an example. If the actuator drives the planar lens to rotate clockwise around the X axis, two actuators located in the first quadrant and the second quadrant are shortened, and two actuators located in the third quadrant and the fourth quadrant are elongated. If the actuator drives the planar lens to rotate clockwise around the Y axis, two actuators located in the second quadrant and the third quadrant are shortened, and two actuators located in the first quadrant and the fourth quadrant are elongated. For a manner in which the actuator drives the planar lens to rotate around the X axis counterclockwise and rotate around the Y axis counterclockwise, details are not described herein again.

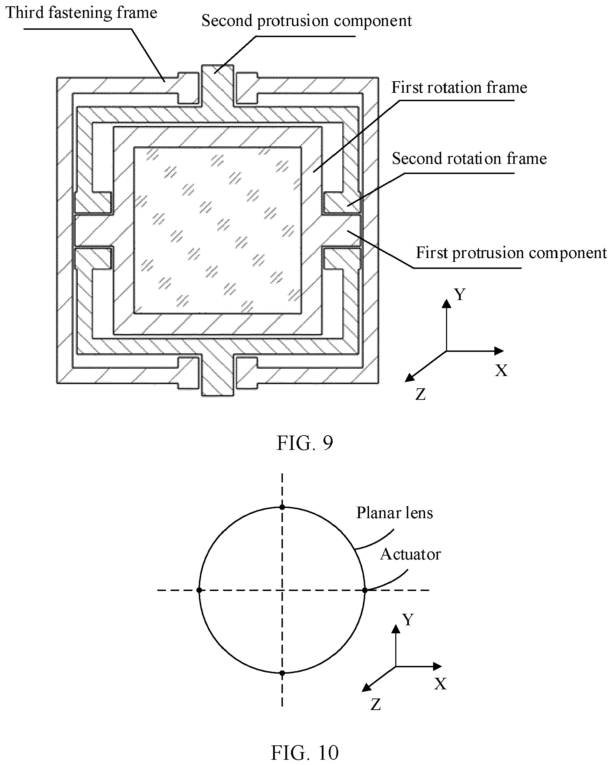

In addition to a case in which the cross section of the planar lens in the radial direction is a rectangle, optionally, referring to FIG. 10, when the cross section of the planar lens in the radial direction is a circle, each pair of actuators in the two pairs of actuators are disposed respectively at intersection points of a diameter of the circle and an edge of the circle, and diameters on which the two pairs of actuators are located are perpendicular to each other. One pair of actuators in the two pairs of actuators are disposed on the X axis, and the other pair of actuators are disposed on the Y axis. For a manner of driving the planar lens to rotate around the X axis and/or the Y axis, refer to the foregoing description. Details are not described herein again.

Certainly, a shape of the planar lens with an equal thickness is not limited in this embodiment, and may be set based on experience or an actual requirement. For example, the planar lens may also be a polygon such as a pentagon or a hexagon. For example, the planar lens is a hexagon. One pair of actuators in the two pairs of actuators are disposed respectively at midpoints of two opposite sides of the hexagon respectively, the other pair of actuators are disposed respectively at two opposite vertexes of the hexagon, and connection lines formed by the actuators in each of the two pairs of actuators are perpendicular to each other. Alternatively, the planar lens may be an ellipse. In this case, the two pairs of actuators are disposed respectively at intersection points of a major axis of the ellipse and an edge of the ellipse and at intersection points of a minor axis of the ellipse and the edge of the ellipse.

In an optional implementation, when the anti-jitter element is the planar lens, the anti-jitter element adjustment apparatus may further include a first rotation frame, a second rotation frame, and a third fastening frame, to drive the planar lens to rotate around the X axis and/or the Y axis. During implementation, the first rotation frame may drive the planar lens to rotate around the X axis, and the second rotation frame may drive the planar lens to rotate around the Y axis. Alternatively, the first rotation frame may drive the planar lens to rotate around the Y axis, and the second rotation frame may drive the planar lens to rotate around the X axis.

The first rotation frame is sleeved on an outer wall of the planar lens in the radial direction in a fastening manner, an outer wall of the first rotation frame in the radial direction has a protrusion component, and the first rotation frame is movably connected to the inside of the second rotation frame through the first protrusion component. An outer wall of the second rotation frame in the radial direction has a second protrusion component, a straight line on which the second protrusion component is located and a straight line on which the first protrusion component is located are perpendicular to each other, and the second rotation frame is movably connected to the inside of the third fastening frame through the second protrusion component.

As shown in FIG. 9, an example in which the first rotation frame drives the planar lens to rotate around the X axis is used. The first rotation frame has one first protrusion component in the positive direction and one first protrusion component in the negative direction of the X axis, and the second rotation frame has one hole that matches the first protrusion component in the positive direction and one hole that matches the first protrusion component in the negative direction of the X axis. The first protrusion component is inserted into the hole on the second rotation frame, so that the first rotation frame is movably connected to the inside of the second rotation frame. Because the first rotation frame is sleeved on the outer wall of the planar lens in the radial direction in a fastening manner, when the first rotation frame rotates around the X axis, the planar lens may be driven to rotate around the X axis.

Correspondingly, the second rotation frame has one second protrusion component in the positive direction and one second protrusion component in the negative direction of the Y axis. Therefore, the straight line on which the first protrusion component is located and the straight line on which the second protrusion component is located are perpendicular to each other. The third fastening frame has one hole that matches the second protrusion component in the positive direction and one hole that matches the second protrusion component in the negative direction of the Y axis. The second protrusion component is inserted into the hole on the third fastening frame, so that the second rotation frame is movably connected to the inside of the third fastening frame, and the planar lens can be driven to rotate around the Y axis. In addition, for a manner of driving the planar lens to rotate around the X axis counterclockwise and the Y axis counterclockwise, details are not described herein again.

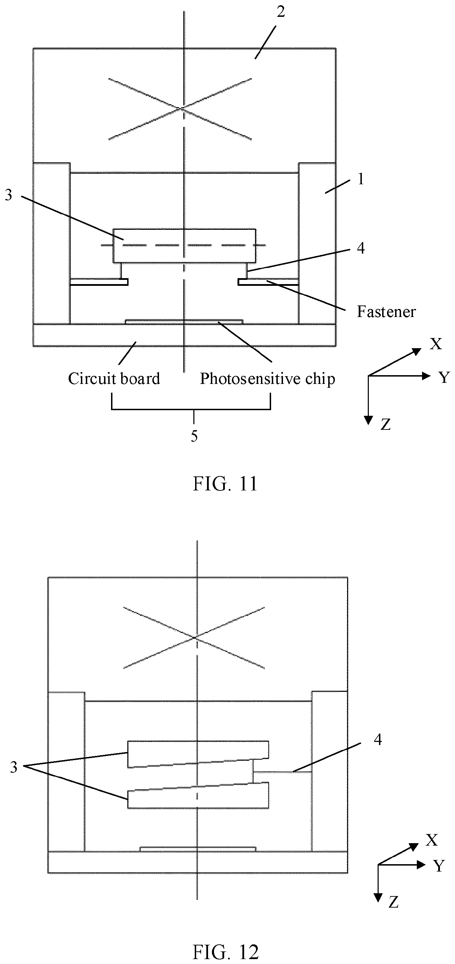

Further, referring to FIG. 11, the apparatus further includes a fastener. The fastener is perpendicularly connected to the inner wall of the lens barrel 1, a size of the fastener matches the size of the anti-jitter element 3, and the anti-jitter element adjustment apparatus 4 is connected to any end in an axial direction of the fastener, and is then connected to the lens barrel 1 through the fastener.

In addition, when the anti-jitter element adjustment apparatus 4 includes two pairs of actuators, the fastener may be four fastening bars, and each fastening bar corresponds to one actuator. In this case, a linear actuator instead of the special-shaped actuator in the foregoing description may be directly used as the actuator. In addition, a length of the fastening bar needs to match the size of the anti-jitter element 3, to avoid blocking light rays. Alternatively, when the anti-jitter element adjustment apparatus 4 includes the first rotation frame, the second rotation frame, and the third fastening frame, the fastener may also be a fastening plate, and a center of the fastening plate has a hole that matches the size and a shape of the anti-jitter element 3. A shape of the fastening frame is not limited in this embodiment.

In an optional implementation, when the anti-jitter element 3 is two wedge-shaped lenses whose inclined planes are disposed opposite to each other, the anti-jitter element adjustment apparatus 4 includes at least one actuator. The at least one actuator is configured to drive at least one of the two wedge-shaped lenses to move in the optical axis. In addition, a track used to drive, by using at least one actuator, the two wedge-shaped lenses to rotate in the optical axis is disposed on the inner wall of the lens barrel 1.

When there is one actuator, the actuator needs to drive the two wedge-shaped lenses to rotate around the optical axis at the same time, and the actuator further needs to fasten the two wedge-shaped lenses on the inner wall of the lens barrel 1. Therefore, the actuator has at least three endpoints, for example, a T-shaped actuator or another special-shaped actuator obtained through deformation based on the T-shaped actuator. The T-shaped actuator is used as an example. As shown in FIG. 12, two endpoints of "-" in a T shape are respectively connected to one wedge-shaped lens, and at least one endpoint of the two endpoints of the "-" is a telescopic end, to drive at least one wedge-shaped lens in the two wedge-shaped plates to move in the optical axis. An endpoint of "|" in the T shape is connected to the inner wall of the lens barrel 1, and a track that matches the endpoint is disposed on the inner wall of the lens barrel 1.

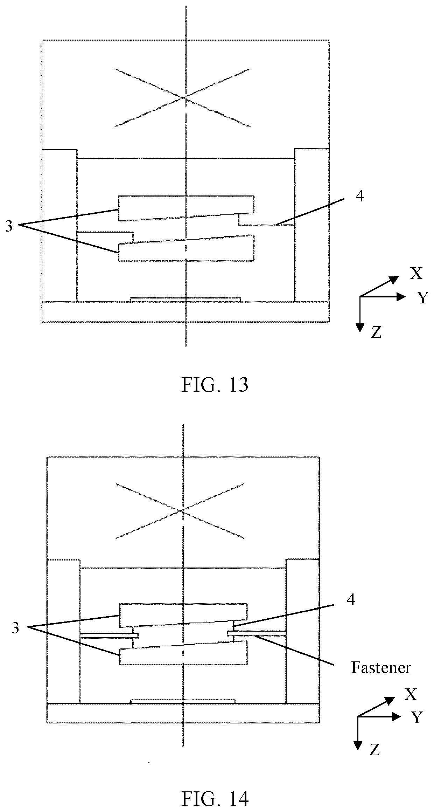

When there are two actuators, the two actuators are respectively connected to one wedge-shaped plate. The actuator may be an L-shaped actuator. As shown in FIG. 13, a telescopic end of the L-shaped actuator is connected to an edge in an axial direction of the wedge-shaped plate. Certainly, there may also be three, four, or more actuators. In this case, one or more actuators are connected to each wedge-shaped plate, and connection strength between the wedge-shaped plate and the lens barrel 1 is reinforced. Details are not described herein.

In addition, when the anti-jitter element 3 is two wedge-shaped lenses whose inclined planes are disposed opposite to each other, the anti-jitter element adjustment apparatus 4 may further include at least two actuators. Correspondingly, the shooting apparatus may further include the fastener perpendicularly connected to the inner wall of the lens barrel 1, and a track used to drive, by using the at least two actuators, the two wedge-shaped lenses to rotate in the optical axis is disposed on the fastener.

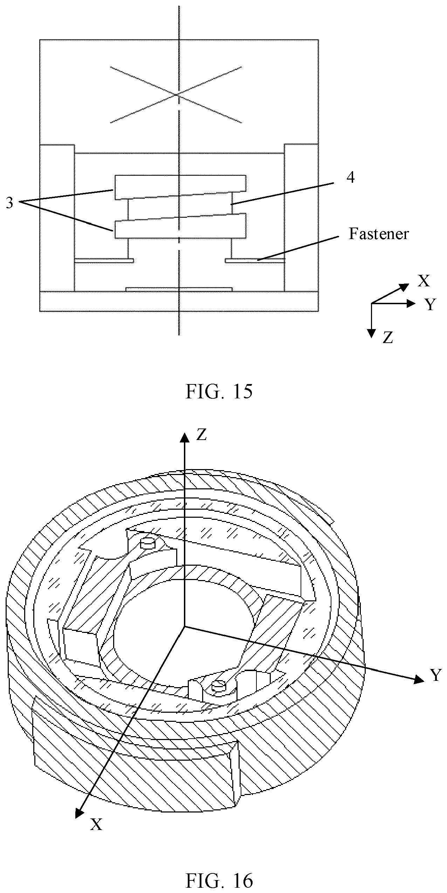

Referring to FIG. 14, the two wedge-shaped lenses may be respectively connected to two ends in the axial direction of the fastener through the actuator. Alternatively, referring to FIG. 15, one of the wedge-shaped lenses may be connected to an end in the axial direction of the fastener through the actuator, and the other wedge-shaped lens is connected to the previous wedge-shaped lens through the actuator. Therefore, the two wedge-shaped lenses are disposed at either end in the axial direction of the fastener. The actuator may drive, by telescoping, the at least one wedge-shaped lens to move in the optical axis, and the actuator may further slide along the track disposed on the fastener, to drive the two wedge-shaped lenses to rotate in the optical axis.

In addition, when the anti-jitter element 3 is two wedge-shaped lenses, if the apparatus further includes the fastener, the track may not be disposed on the fastener, but the track that matches the fastener is disposed on the inner wall of the lens barrel 1. Because the anti-jitter element adjustment apparatus 4 is connected to the fastener, the fastener slides along the track, which may drive the anti-jitter element adjustment apparatus 4 to rotate around the optical axis, and further drive the two wedge-shaped lenses to rotate around the optical axis.

Optionally, when the anti-jitter element 3 is two wedge-shaped lenses, the anti-jitter element adjustment apparatus 4 may be a voice coil motor shown in FIG. 16. The voice coil motor is configured to drive at least one wedge-shaped lens in the anti-jitter element 3 to move in the optical axis, and drive the two wedge-shaped lenses in the anti-jitter element 3 to rotate in the optical axis.

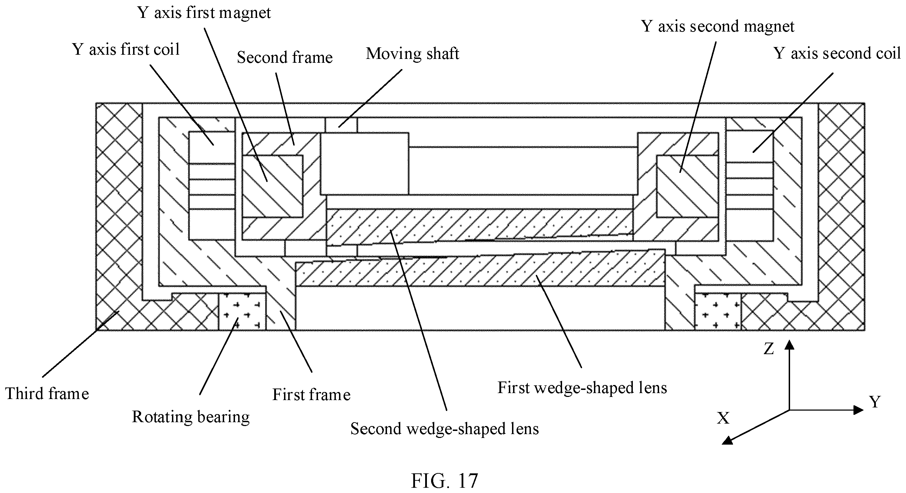

An example in which a wedge-shaped lens close to the lens 2 is a first wedge-shaped lens, a wedge-shaped lens away from the lens 2 is a second wedge-shaped lens, and the voice coil motor drives the second wedge-shaped lens is used. FIG. 17 is a sectional view of a voice coil motor in a YZ direction. It can be learned that the voice coil motor includes a first frame, a second frame, and a third frame that are coaxially disposed, the second frame is connected to the first frame through a moving shaft parallel to an optical axis of a lens, and the third frame is connected to the first frame through a rotating bearing.

The second frame is configured to fasten the second wedge-shaped lens, and a Y axis first magnet and a Y axis second magnet are embedded in an outer wall of the second frame in the radial direction. The first frame is configured to fasten the first wedge-shaped lens, and the Y axis first coil and the Y axis second coil are embedded in an inner wall of the first frame in the radial direction. By applying a voltage to the Y axis first coil and the Y axis second coil, the coil generates a current, so that the Y axis first magnet and the Y axis second magnet move relative to the coil, to push the second frame to move along the moving shaft. Because the moving shaft is parallel to the optical axis of the lens, the second wedge-shaped lens is driven to move in the optical axis.

During implementation, a movement amount of the second wedge-shaped lens, in other words, a spacing between the two wedge-shaped lenses, may be controlled by controlling a size and a direction of the voltage applied to the coil. For example, when no voltage is applied, the inclined planes of the two wedge-shaped lenses may be disposed to be in contact with each other. After the voltage is applied to the coil, a larger voltage applied indicates a larger movement amount of the second wedge-shaped lens in a positive direction of the Z axis, so that the spacing between the two wedge-shaped lenses is larger. Alternatively, when no voltage is applied, the spacing between the two wedge-shaped lenses may be set as a reference spacing. In this way, when a larger forward voltage is applied, the second wedge-shaped lens moves in a positive direction of the optical axis, so that the spacing between the two wedge-shaped lenses increases. When a larger negative voltage is applied, the second wedge-shaped lens moves in a negative direction of the optical axis, so that the spacing between the two wedge-shaped lenses decreases. Certainly, a relationship between a voltage direction and a movement direction may be set based on an actual requirement or experience. This is not limited in this embodiment.

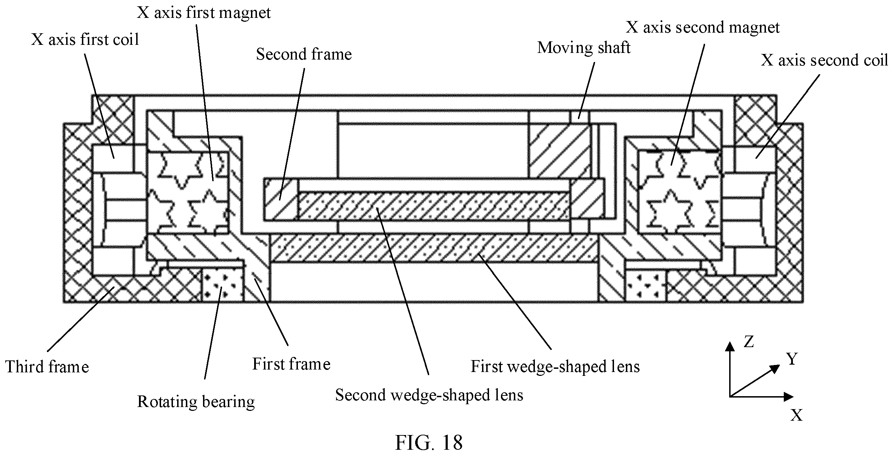

FIG. 18 is a sectional view of a voice coil motor in an XZ direction. It can be seen that, an X axis first magnet and the Y axis first magnet are further embedded in an outer wall of the first frame in the radial direction, and an X axis first coil and an X axis second coil are further embedded in an inner wall of the third frame in the radial direction. By controlling a size and direction of a voltage applied to the X axis coil, the X axis magnet and the X axis coil can be moved relative to each other, to cooperate with the rotating bearing to rotate the two wedge-shaped lenses around the optical axis. For example, the forward voltage is applied to the X axis coil, so that the two wedge-shaped lenses rotate clockwise around the optical axis.

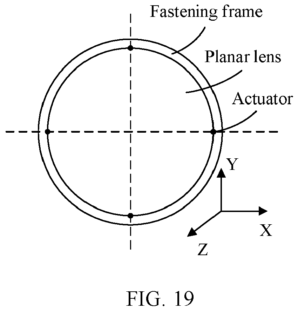

In an optional implementation, as shown in FIG. 19, the apparatus provided in this embodiment further includes a fastening frame. An inner wall of the fastening frame matches an outer wall of the anti-jitter element 3 in the radial direction, so that the fastening frame can be sleeved on the outer wall of the anti-jitter element 3 in the radial direction, to fasten the anti-jitter element 3. Correspondingly, the anti-jitter element adjustment apparatus 4 may be indirectly connected to the anti-jitter element 3 by connecting to the fastening frame.

Further, the apparatus provided in this embodiment further includes a shooting adjustment element. The shooting adjustment element is electrically connected to the anti-jitter element adjustment apparatus. The shooting adjustment element is configured to obtain measurement data, determine target adjustment data of the anti-jitter element based on the measurement data, and control the anti-jitter element adjustment apparatus to adjust a pose of the anti-jitter element based on the target adjustment data.

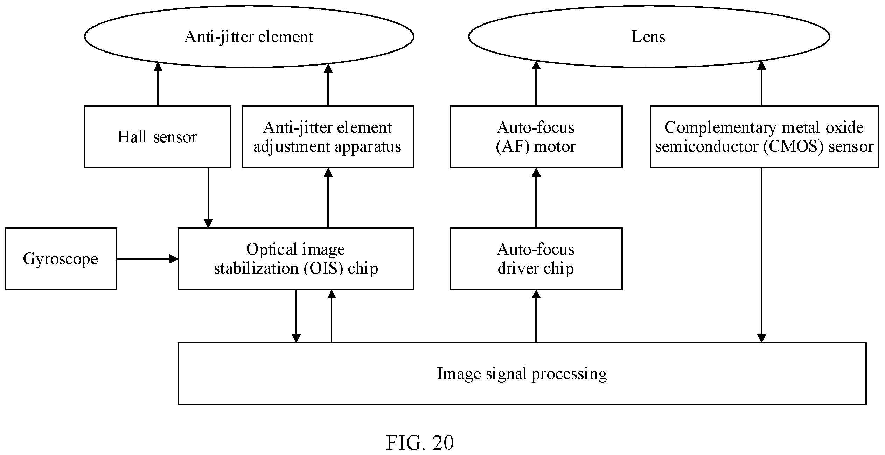

Referring to FIG. 20, during implementation, the shooting adjustment element may be an optical image stabilization (optical image stabilization, OIS) chip. The shooting adjustment element is electrically connected to a gyroscope and a Hall sensor, and the measurement data obtained by the shooting adjustment element includes a jitter amount and a jitter direction that are of the shooting apparatus and that are measured by the gyroscope, and current pose data that is of the anti-jitter element 3 and that is measured by the Hall sensor. Then, the shooting adjustment element calculates and determines the target adjustment data of the anti-jitter element 3 based on the obtained jitter amount, jitter direction, and current pose data of the anti-jitter element 3, and controls the anti-jitter element adjustment apparatus 4 to adjust the pose of the anti-jitter element 3 based on the target adjustment data, to implement anti-jitter shooting.

In addition, as shown in FIG. 20, the shooting apparatus further includes an auto-focus (auto-focus, AF) motor, an AF drive chip, and a complementary metal oxide semiconductor (complementary metal-oxide-semiconductor, CMOS) sensor, configured to adjust the lens group included in the lens 2.

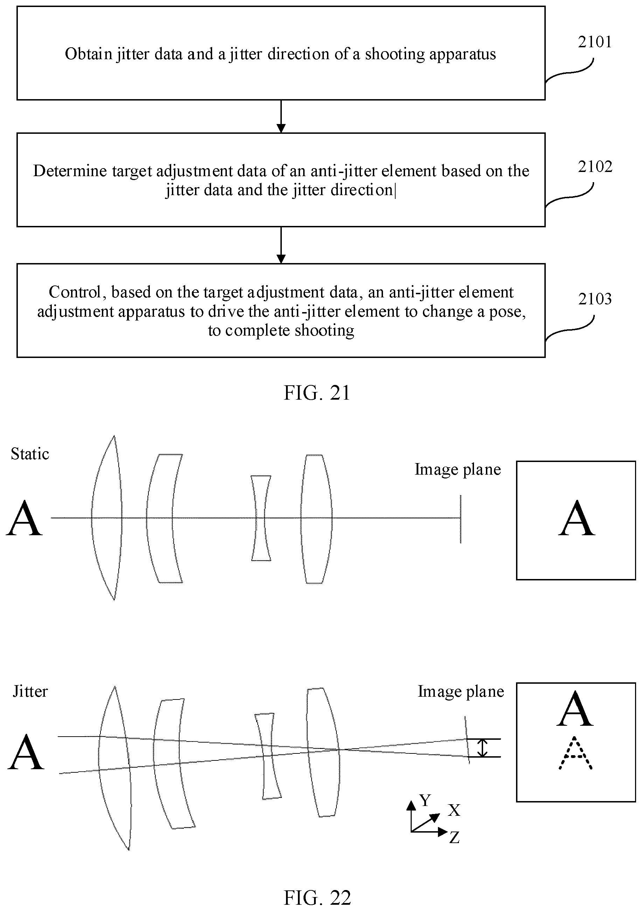

Based on a same conception, this embodiment further provides a shooting method, and the method is applied to any shooting apparatus in FIG. 4 to FIG. 20. As shown in FIG. 21, the method includes the following steps.

Step 2101: Obtain jitter data and a jitter direction of a shooting apparatus.

The jitter data of the shooting apparatus is used to indicate a jitter amplitude of the shooting apparatus. In this embodiment, the jitter data refers to an offset between an image shot by a jitter shooting apparatus and an image shot by a non-jitter shooting apparatus. As shown in FIG. 22, an image A shot when the shooting apparatus does not jitter is located in a center, and an image A shot when the shooting apparatus jitters deviates from the center and is upward, and a spacing between the two As is the jitter data. A manner of obtaining the jitter data and the jitter direction includes: continuously detecting the shooting apparatus by using a gyroscope, obtaining a jitter amount and the jitter direction of the shooting apparatus, and determining the jitter data of the shooting apparatus based on the jitter amount.

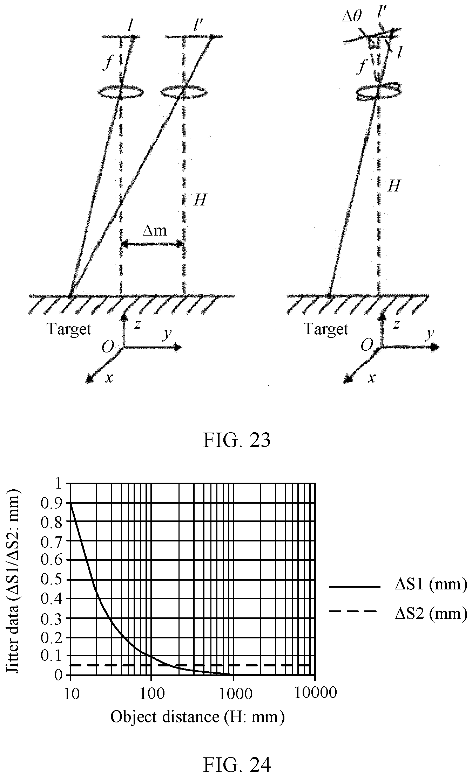

The jitter direction includes a positive x direction, a negative x direction, a positive y direction, and a negative y direction. The jitter direction may be directly measured by using the gyroscope. For example, in a case shown in FIG. 22, the jitter direction is the positive y direction. It should be noted that, different jitter manners of the shooting apparatus have different manners of calculating the jitter data. Therefore, for different jitter manners, the jitter amount detected by the gyroscope is also different. As shown in FIG. 23, when the jitter manner is translation jitter around an X axis and/or a Y axis, the jitter amount measured by the gyroscope is a translation amount, and the jitter data $\Delta S1$ is calculated according to the following formula:

$$\Delta S1 = l^{\wedge\prime} - l = f \times \Delta m / H$$

In the formula, f is a focal length, $\Delta m$ is the translation amount, H is an object distance, 1 is a distance between an image point and an image center when the shooting apparatus does not jitter, and $1^{\wedge\prime}$ is a distance between the image point and the image center when the shooting apparatus jitters.

When the jitter manner is rotation jitter around the X axis and/or the Y axis, the jitter amount measured by the gyroscope is a rotation amount, and the jitter data $\Delta S2$ is calculated according to the following formula:

$$\Delta S2 = l^{\wedge\prime} - l = f \times \tan(\Delta\theta)$$

In the formula, f is still the focal length, and $\Delta\theta$ is the rotation amount.

In addition, referring to FIG. 24, for example, the focal length is 3 mm, the translation amount $\Delta m$ is 3 mm, and the rotation amount $\Delta\theta$ is 1 degree. It can be seen that, when the object distance H is greater than 100 mm, in other words, the object distance is relatively long, a value of the jitter data $\Delta S2$ generated when the jitter amount is the rotation amount is greater than a value of the jitter data $\Delta S1$ generated when the jitter amount is the translation amount. In other words, impact of the rotation jitter is greater than impact of the translation jitter. Because the object distance of an object shot by the shooting apparatus is usually relatively long, this embodiment is mainly directed to the jitter manner of rotating around the X axis and/or the Y axis. Therefore, in this embodiment, the jitter amount continuously detected by the gyroscope is a rotation angle $\Delta\theta$ of the shooting apparatus. Then, a product of the focal length f of the shooting apparatus and the detected rotation angle $\Delta\theta$ is calculated, so that the jitter data can be obtained based on the jitter amount.

Alternatively, a manner of obtaining the jitter data in this embodiment further includes: measuring an image shot by the jitter shooting apparatus, to obtain the jitter data. An object image shot by the jitter shooting apparatus has a blurred boundary of the object. The blurred boundary is processed to obtain a clear boundary of the object. The jitter data can be obtained by measuring a distance between the blurred boundary and the clear boundary.

Certainly, a manner of obtaining the jitter data is not limited in this embodiment. Regardless of a manner of obtaining the jitter data, after the jitter data is obtained, the jitter direction of the shooting apparatus may be further determined based on the jitter data. Refer to step 2102.

Step 2102: Determine target adjustment data of an anti-jitter element based on the jitter data and the jitter direction.

After the jitter data and the jitter direction are determined, the target adjustment data of the anti-jitter element may be further determined based on the jitter data and the jitter direction.

Optionally, when the anti-jitter element is a planar lens with an equal thickness, the target adjustment data includes a rotation angle and a rotation direction of the plate. The determining the target adjustment data of the anti-jitter element based on the jitter data and the jitter direction includes: determining the rotation angle based on the jitter data according to the following formula, and determining the rotation direction based on the jitter direction.

First, the rotation angle $\omega$ is determined according to the following formula:

$$\omega = \frac{\Delta s}{d} \times \frac{n}{n-1}$$

In the formula, $\Delta s$ represents the jitter data, $n$ represents a refractive index of the planar lens, $d$ represents the thickness of the planar lens, and $\omega$ represents the rotation angle.

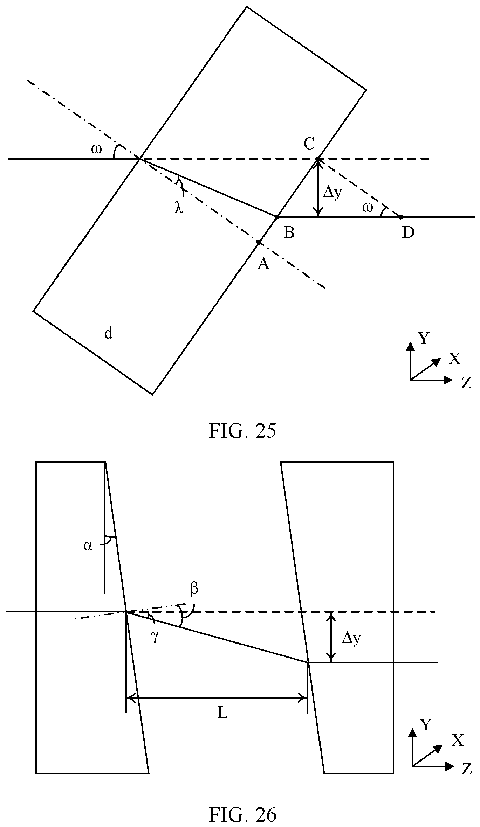

Referring to FIG. 25, the foregoing formula may be derived based on the following process:

$$AC = \tan \omega \, \mathrm{x} d$$

$$AB = \tan \lambda \, \mathrm{x} d$$

$$BC = d\mathrm{x}(\tan \omega - \tan \lambda)$$

$$CD = \frac{BC}{\tan \omega} = d\mathrm{x}\left(1 - \frac{\tan \lambda}{\tan \omega}\right)$$

$$\Delta s = CD\mathrm{x} \sin \omega$$

If $\omega$ is less than 10°, $\sin \omega = \tan \omega = \omega$.

Therefore, $\Delta s$ may be represented as the following formula:

$$\Delta s \approx d\mathrm{x}\left(1 - \frac{\sin \lambda}{\sin \omega}\right)\mathrm{x}\omega$$

According to a definition of the refractive index $n$:

$$n = \frac{\sin \omega}{\sin \lambda}$$

Therefore, $\Delta s$ may be represented as the following formula:

$$\Delta s = \frac{n-1}{n}\mathrm{x}d\mathrm{x}\omega$$

The formula for calculating the rotation angle $\omega$ may be obtained through further transposition of terms:

$$\omega = \frac{\Delta \mathrm{s}}{\mathrm{d}}\mathrm{x}\frac{\mathrm{n}}{\mathrm{n}-1}$$

Correspondingly, when $\omega$ is greater than 10°, calculation is performed according to the following formula:

$$\Delta s = d\mathrm{x}\cos \omega \, \mathrm{x}\left\{\tan \omega - \tan\left[arcsin\left(\frac{\sin \omega}{n}\right)\right]\right\}$$

Still referring to FIG. 25, a derivation process of the formula is as follows:

$$\Delta s = BC\mathrm{x}\cos \omega$$

$$BC = d\mathrm{x}(\tan \omega - \tan \lambda)$$

Therefore, the jitter data may be represented according to the following formula:

$$\Delta s = dx(tan\,\omega - tan\,\lambda)x\,cos\,\omega$$

According to the definition of the refractive index:

$$sin\,\omega = n\,x sin\,\lambda$$

Therefore, $\lambda$ may be represented according to the following formula:

$$\lambda = arcsin\left(\frac{sin\,\omega}{n}\right)$$

In this case, $\Delta s$ may be written as the following formula:

$$\Delta s = dx\,cos\,\omega\,x\left\{tan\,\omega - tan\left[arcsin\left(\frac{sin\,\omega}{n}\right)\right]\right\}$$

After the rotation angle $\omega$ is determined, the rotation direction is further determined based on the jitter direction. When the jitter direction of the jitter data is the positive y direction, a rotation direction of the planar lens is a clockwise direction around the X axis, to generate a compensation amount in the negative y direction to compensate for the jitter data in the positive y direction. When the jitter direction of the jitter data is the negative y direction, the rotation direction of the planar lens is a counterclockwise direction around the x axis. When the jitter direction of the jitter data is the positive x direction, the rotation direction of the planar lens is a counterclockwise direction around the y axis. When the jitter direction is the negative x direction, the rotation direction is a clockwise direction around the y axis.

Alternatively, the anti-jitter element may be two wedge-shaped lenses whose inclined planes are disposed opposite to each other. In an optional implementation, the target adjustment data includes a spacing between the two wedge-shaped lenses, a rotation angle, and a rotation direction. Therefore, the determining the target adjustment data of the anti-jitter element based on the jitter data and the jitter direction includes: determining the spacing between the two wedge-shaped lenses based on the jitter data according to the following formula, and determining the rotation angle and the rotation direction based on the jitter direction.

First, the spacing L between the two wedge-shaped lenses is determined according to the following formula:

$$L = \frac{\Delta s}{(n-1)x\alpha}$$

In the formula, $\Delta s$ represents the jitter data, n represents a refractive index of any wedge-shaped lens, $\alpha$ represents an included angle between a vertical plane and an inclined plane of any wedge-shaped lens, $\alpha$ is not greater than 5°, and L represents the spacing between the two wedge-shaped lenses.

Referring to FIG. 26, the foregoing formula may be derived based on the following process:

When $\alpha$ is less than 5°, the formula may be derived based on the following process:

$$n = \frac{sin\,\beta}{sin\,\alpha} = \frac{\beta}{\alpha}$$

$$\gamma = \beta - \alpha$$

$$tan\,\gamma = \frac{\Delta s}{L}$$

$$\Delta s = tan\,\gamma x L \approx \gamma x L = (\beta - \alpha) x L = (n\alpha - \alpha) x L = (n-1) x \alpha x L$$

Therefore, L may be represented according to the following formula:

$$L = \frac{\Delta s}{(n-1) x \alpha}$$

After the spacing L between the two wedge-shaped lenses is determined, the rotation angle and the rotation direction are further determined based on the jitter direction. When the jitter direction of the jitter data is the positive y direction, rotation angles of the two wedge-shaped lenses are 0 degrees. In other words, the two wedge-shaped lenses only need to maintain the angles shown in FIG. 26, to generate the compensation amount in the negative y direction to compensate for the jitter data in the positive y direction. When the jitter direction of the jitter data is the negative y direction, the rotation angles of the two wedge-shaped lenses are 180 degrees, and the rotation direction is a clockwise direction or a counterclockwise direction around a z axis. When the jitter direction of the jitter data is the positive x direction, the rotation angles of the two wedge-shaped lenses are 90 degrees, and the rotation direction is the counterclockwise direction around the z axis. When the jitter direction is the negative x direction, the rotation angles of the two wedge-shaped lenses are 90 degrees, and the rotation direction is the clockwise direction around the z axis.

After the target adjustment data is determined, adjustment on the anti-jitter element may be triggered. For details, refer to step 2103.

Step 2103: Control, based on the target adjustment data, the anti-jitter element adjustment apparatus to drive the anti-jitter element to change a pose, to complete shooting.

For the obtained target adjustment data, the anti-jitter element adjustment apparatus is controlled to drive, based on the obtained target adjustment data, the anti-jitter element to change the pose, so that jitter of the shooting apparatus can be compensated for, and an edge of a shot image is clear, to complete shooting. For a manner in which the anti-jitter element adjustment apparatus drives the anti-jitter element, refer to the foregoing description. Details are not described herein again.

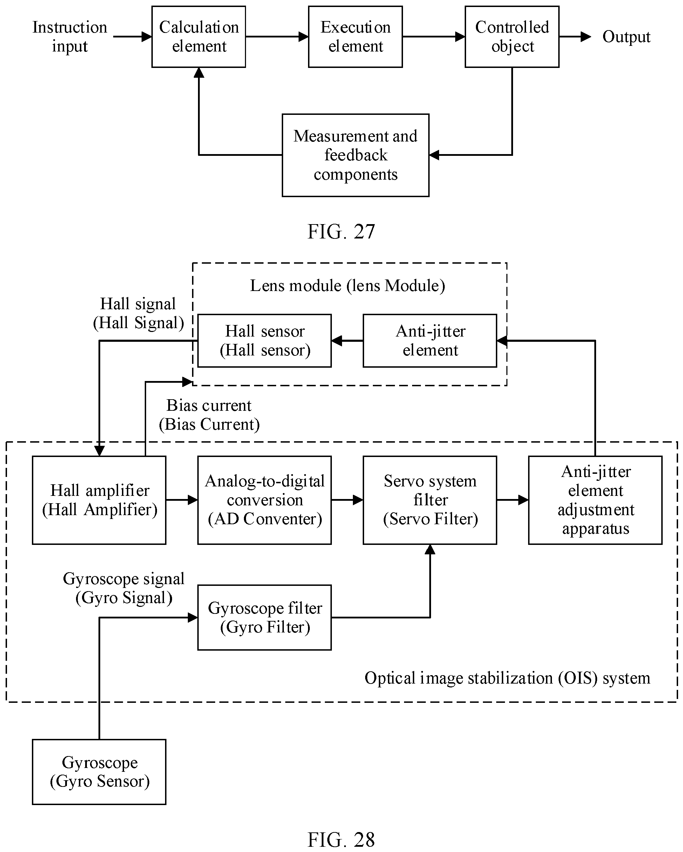

It should be noted that, in this embodiment, the anti-jitter element adjustment apparatus adjusts the anti-jitter element based on an OIS system shown in FIG. 27. An instruction input refers to a jitter amount and a jitter direction detected by a gyroscope (gyro). A calculation element uses an OIS chip, an execution element is the anti-jitter element adjustment apparatus, a controlled object is the anti-jitter element, and measurement and feedback elements use a Hall sensor.

During implementation, referring to FIG. 28, the OIS chip may be a servo filter (servo filter). When a lens jitters, on one hand, the gyroscope detects a jitter amount and a jitter direction of the lens, and a gyroscope filter (gyro filter) obtains, through calculation based on the jitter amount and the jitter direction, a digital signal that can be received by the servo filter, and transmits the digital signal to the servo filter. On the other hand, the Hall sensor detects a pose signal of the anti-jitter element, and amplifies the pose signal through a Hall amplifier (Hall amplifier). In addition, the Hall amplifier may further fine-tune the pose signal by using a bias current (bias current). Then, analog-to-digital conversion (analogue-to-digital conversion, AD conversion) is performed on the amplified pose signal, to obtain the digital signal that can be received by the servo filter, and the digital signal is transmitted to the servo filter.

Then, the servo filter obtains, through calculation based on the received digital signal, a value of rotation and/or translation required by the anti-jitter element, and transmits the value to the anti-jitter element adjustment apparatus. For different anti-jitter element adjustment apparatuses, the value may be different. For example, when the anti-jitter element adjustment apparatus is a telescopic actuator, the value is a telescopic amount. When the anti-jitter element adjustment apparatus is a voice coil motor, the value is a variation of a coil voltage in the voice coil motor.

Then, the anti-jitter element adjustment apparatus adjusts the anti-jitter element based on the value. After the adjustment is completed, a Hall element detects the pose data of the adjusted anti-jitter element again and feeds back the pose data to the servo filter, and the servo filter recalculates the value of rotation and/or translation required by the adjusted anti-jitter element. In this way, a position of the anti-jitter element is continuously adjusted, to implement anti-jitter shooting.

In conclusion, in this embodiment, the anti-jitter element adjustment apparatus drives, based on the target adjustment data, the anti-jitter element to perform pose adjustment, so that the jitter of the shooting apparatus can be compensated for. In this way, an image or a video shot when the shooting apparatus jitters is relatively clear, and a shooting effect is good. Compared with an anti-jitter system with an anti-jitter element with focal power, the anti-jitter element without the focal power improves imaging quality, and reduces a quantity of lenses in the shooting apparatus, so that a weight and costs of the shooting apparatus are reduced. In addition, the lens and the anti-jitter element are decoupled, so that the anti-jitter element can adapt to a plurality of types of lenses, a design and production period of the shooting apparatus is shortened, and universality of the shooting apparatus is improved.

Further, the anti-jitter element in this embodiment may be a planar lens or a wedge-shaped lens, and processing a glass material into the anti-jitter element requires relatively low processing costs, high precision, and a relatively high yield.

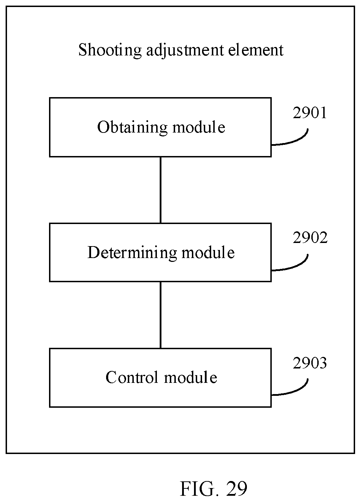

Based on a same concept, an embodiment of this application further provides a shooting adjustment element. The shooting adjustment element is applied to any shooting apparatus in FIG. 4 to FIG. 20. Referring to FIG. 29, the shooting adjustment element includes:

an obtaining module 2901, configured to obtain jitter data and a jitter direction of a shooting apparatus;
a determining module 2902, configured to determine target adjustment data of an anti-jitter element based on the jitter data and the jitter direction; and
a control module 2903, configured to control, based on the target adjustment data, an anti-jitter element adjustment apparatus to drive the anti-jitter element to change a pose, to complete shooting.

Optionally, the obtaining module 2901 is configured to: continuously detect the shooting apparatus by using a gyroscope, obtain a jitter amount and the jitter direction of the shooting apparatus, and determine the jitter data of the shooting apparatus based on the jitter amount.

Optionally, when the anti-jitter element is a planar lens with an equal thickness, the target adjustment data includes a rotation angle and a rotation direction of the plate.

The determining module 2902 is configured to determine, based on the jitter data, the rotation angle according to the following formula:

$$\omega = \frac{\Delta s}{d} \times \frac{n}{n-1}$$

In the formula, $\Delta s$ represents the jitter data, n represents a refractive index of the planar lens, d represents the thickness of the planar lens, and w represents the rotation angle.

The determining module 2902 determines the rotation direction based on the jitter direction.

Optionally, the anti-jitter element is two wedge-shaped lenses whose inclined planes are disposed opposite to each other, and the target adjustment data includes a spacing between the two wedge-shaped lenses, a rotation angle, and a rotation direction.

The determining module 2902 is configured to determine the spacing between the two wedge-shaped lenses based on the jitter data according to the following formula:

$$L = \frac{\Delta s}{(n-1) \times \alpha}$$

In the formula, $\Delta s$ represents the jitter data, n represents a refractive index of any wedge-shaped lens, $\alpha$ represents an included angle between a vertical plane and an inclined plane of any wedge-shaped lens, and L represents the spacing between the two wedge-shaped lenses.

The rotation angle and the rotation direction are determined based on the jitter direction.

In conclusion, in this embodiment, the anti-jitter element adjustment apparatus drives, based on the target adjustment data, the anti-jitter element to perform pose adjustment, so that the jitter of the shooting apparatus can be compensated for. In this way, an image or a video shot when the shooting apparatus jitters is relatively clear, and a shooting effect is good. Because the anti-jitter element has no focal power, a quantity of lenses in the shooting apparatus is reduced, so that a weight and costs of the anti-jitter element are reduced. In addition, the anti-jitter element can adapt to a plurality of types of lenses, a design and production period of the shooting apparatus is shortened, and universality of the shooting apparatus is improved.

For example, the shooting adjustment element provided in this embodiment of this application may be an optical image stabilization chip shown in FIG. 20. Specifically, in a specific implementation scenario, a servo system filter shown in FIG. 28 may be used to implement a function of the shooting adjustment element.

Further, the anti-jitter element in this embodiment may be a planar lens or a wedge-shaped lens, and processing a glass material into the anti-jitter element requires relatively low processing costs, high precision, and a relatively high yield.

It should be understood that, when the foregoing system implements functions of the system, division of the foregoing function modules is merely an example. In actual implementation, the foregoing functions can be allocated to different modules and implemented as necessary. In other words, inner structures of devices are divided into different function modules to implement all or a part of the functions described above. In addition, the apparatuses provided in the foregoing embodiments and the method embodiments pertain to a same concept. For a specific implementation process thereof, refer to the method embodiments. Details are not described herein again.

It should be noted that, functions of the functional modules in the foregoing shooting system may be implemented by a chip installed in the system, or may be implemented by a processor in the shooting system. For example, the chip or the processor may be a chip or a processor inside a mobile phone or some monomer cameras. For another example, the chip may alternatively be a chip connected to a processor of the mobile phone, and is configured to implement the foregoing anti-jitter control function.

This application provides a computer program. When the computer program is executed by a computer, the processor or the computer may perform corresponding steps and/or procedures in the foregoing method embodiments.

The foregoing descriptions are merely embodiments of this application, but are not intended to limit this application. Any modification, equivalent replacement, or improvement made without departing from the spirit and principle of this application should fall within the protection scope of this application.

## Claims

1. A shooting apparatus, wherein the shooting apparatus comprises: a lens barrel, a lens, an anti-jitter element, an anti-jitter element adjustment apparatus, and a photosensitive element, wherein

   the lens is disposed at a first end in an axial direction of the lens barrel, and the photosensitive element is disposed at a second end; and
   the anti-jitter element is located between the lens and the photosensitive element, the anti-jitter element and the lens are coaxially disposed, the anti-jitter element has no focal power and is connected to an inner wall of the lens barrel through the anti-jitter element adjustment apparatus, and the anti-jitter element adjustment apparatus is configured to adjust a pose of the anti-jitter element.

2. The apparatus according to claim 1, wherein the anti-jitter element is a planar lens with an equal thickness.

3. The apparatus according to claim 2, wherein the anti-jitter element adjustment apparatus comprises an actuator, the actuator is configured to drive the planar lens to rotate around an X axis and/or a Y axis, the X axis is perpendicular to an optical axis of the lens, and the Y axis is perpendicular to the X axis and the optical axis.

4. The apparatus according to claim 3, wherein there are two pairs of actuators;

   when a cross section of the planar lens in a radial direction is a rectangle, each actuator in the two pairs of actuators is connected to a midpoint of each side of the planar lens; or
   each actuator of the two pairs of actuators is connected to each corner of the planar lens; and
   when the cross section of the planar lens in the radial direction is a circle, there are two pairs of actuators, each pair of actuators in the two pairs of actuators are connected respectively to intersection points of a diameter of the circle and an edge of the circle, and diameters on which the two pairs of actuators are located are perpendicular to each other.

5. The apparatus according to claim 2, wherein the anti-jitter element adjustment apparatus comprises: a first rotation frame, a second rotation frame, and a third fastening frame, the first rotation frame, the second rotation frame, and the third fastening frame are configured to drive the planar lens to rotate around an X axis and/or an Y axis, the X axis is perpendicular to an optical axis of the lens, and the Y axis is perpendicular to the X axis and the optical axis;

   the first rotation frame is sleeved on an outer wall of the planar lens in a radial direction in a fastening manner, an outer wall of the first rotation frame in the radial direction has a protrusion component, and the first rotation frame is movably connected to the inside of the second rotation frame through the first protrusion component; and
   an outer wall of the second rotation frame in the radial direction has a second protrusion component, a straight line on which the second protrusion component is located and a straight line on which the first protrusion component is located are perpendicular to each other, and the second rotation frame is movably connected to the inside of the third fastening frame through the second protrusion component.

6. The apparatus according to any one of claims 1 to 5, wherein the apparatus further comprises a fastener; and

the fastener is perpendicularly connected to the inner wall of the lens barrel, a size of the fastener matches a size of the anti-jitter element, and the anti-jitter element adjustment apparatus is connected to any end in an axial direction of the fastener, and is then connected to the lens barrel through the fastener.

7. The apparatus according to claim 1, wherein the anti-jitter element is two wedge-shaped lenses whose inclined planes are disposed opposite to each other.

8. The apparatus according to claim 7, wherein the anti-jitter element adjustment apparatus comprises a voice coil motor, and the voice coil motor is configured to drive at least one wedge-shaped lens of the two wedge-shaped lenses to move in an optical axis of the lens, and drive the two wedge-shaped lenses to rotate in the optical axis.

9. The apparatus according to claim 7, wherein the anti-jitter element adjustment apparatus comprises at least one actuator, and the at least one actuator is configured to drive at least one wedge-shaped lens of the two wedge-shaped lenses to move in the optical axis; and
a track used to drive, by using the at least one actuator, the two wedge-shaped lenses to rotate in the optical axis is disposed on the inner wall of the lens barrel.

10. The apparatus according to claim 7, wherein the anti-jitter element adjustment apparatus comprises at least two actuators, and the at least two actuators are configured to drive at least one wedge-shaped lens of the two wedge-shaped lenses to move in the optical axis; and
the shooting apparatus further comprises the fastener perpendicularly connected to the inner wall of the lens barrel, and a track used to drive, by using the at least two actuators, the two wedge-shaped lenses to rotate in the optical axis is disposed on the fastener.

11. The apparatus according to any one of claims 1 to 4, 6, 7, 9, and 10, wherein the apparatus further comprises: a fastening frame; and
the fastening frame is sleeved on an outer wall of the anti-jitter element in a radial direction, and is configured to fasten the anti-jitter element.

12. The apparatus according to any one of claims 1 to 11, wherein the apparatus further comprises a shooting adjustment element, the shooting adjustment element is electrically connected to the anti-jitter element adjustment apparatus, and the shooting adjustment element is configured to: obtain measurement data, determine target adjustment data of the anti-jitter element based on the measurement data, and control the anti-jitter element adjustment apparatus to adjust the pose of the anti-jitter element based on the target adjustment data.

13. A shooting method, wherein the method is applied to the shooting apparatus according to any one of claims 1 to 12, and the method comprises:

obtaining jitter data and a jitter direction of the shooting apparatus;
determining target adjustment data of an anti-jitter element based on the jitter data and the jitter direction; and
controlling, based on the target adjustment data, an anti-jitter element adjustment apparatus to drive the anti-jitter element to change a pose, to complete shooting.

14. The method according to claim 13, wherein the obtaining jitter data and a jitter direction of the shooting apparatus comprises:

continuously detecting the shooting apparatus by using a gyroscope, and obtaining a jitter amount and the jitter direction of the shooting apparatus; and
determining the jitter data of the shooting apparatus based on the jitter amount.

15. The method according to claim 13 or 14, wherein the anti-jitter element is a planar lens with an equal thickness, and the target adjustment data comprises a rotation angle and a rotation direction of the plate;
the determining target adjustment data of an anti-jitter element based on the jitter data and the jitter direction comprises:

determining the rotation angle based on the jitter data according to the following formula:

$$\omega = \frac{\Delta s}{d} \times \frac{n}{n-1},$$

wherein

$\Delta$s represents the jitter data, n represents a refractive index of the planar lens, d represents the thickness of the planar lens, and w represents the rotation angle; and
determining the rotation direction based on the jitter direction.

16. The method according to claim 13 or 14, wherein the anti-jitter element is two wedge-shaped lenses whose inclined planes are disposed opposite to each other, and the target adjustment data comprises a spacing between the two wedge-shaped lenses, a rotation angle, and a rotation direction;
the determining target adjustment data of an anti-jitter element based on the jitter data and the jitter direction comprises:

determining the spacing between the two wedge-shaped lenses based on the jitter data according to the following formula:

$$L = \frac{\Delta s}{(n-1) \times \alpha},$$

wherein

$\Delta$s represents the jitter data, n represents a refractive index of any wedge-shaped lens, $\alpha$ represents an included angle between a vertical plane and an inclined plane of any wedge-shaped lens, and L represents the spacing between the two wedge-shaped lenses; and
determining the rotation angle and the rotation direction based on the jitter direction.

17. A shooting adjustment element, wherein the shooting adjustment element is applied to the shooting apparatus according to any one of claims 1 to 12, and the shooting adjustment element comprises:

an obtaining module, configured to obtain jitter data and a jitter direction of the shooting apparatus;
a determining module, configured to determine target adjustment data of an anti-jitter element based on the jitter data and the jitter direction; and
a control module, configured to control, based on the target adjustment data, an anti-jitter element adjustment apparatus to drive the anti-jitter element to change a pose, to complete shooting.

18. The shooting adjustment element according to claim 17, wherein the obtaining module is configured to continuously detect the shooting apparatus by using a gyroscope, obtain a jitter amount and the jitter direction of the shooting apparatus, and determine the jitter data of the shooting apparatus based on the jitter amount.

19. The shooting adjustment element according to claim 17 or 18, wherein the anti-jitter element is a planar lens with an equal thickness, the target adjustment data comprises a rotation angle and a rotation direction of the plate, and the determining module is configured to determine the rotation angle based on the jitter data according to the following formula:

$$\omega = \frac{\Delta s}{d} \times \frac{n}{n-1},$$

wherein

$\Delta$s represents the jitter data, n represents a refractive index of the planar lens, d represents the thickness of the planar lens, and w represents the rotation angle; and
the determining module is configured to determine the rotation direction based on the jitter direction.

20. The shooting adjustment element according to claim 17 or 18, wherein the anti-jitter element is two wedge-shaped lenses whose inclined planes are disposed opposite to each other, the target adjustment data comprises a spacing between the two wedge-shaped lenses, a rotation angle, and a rotation direction, and the determining module is configured to determine the spacing between the two wedge-shaped lenses based on the jitter data according to the following formula:

$$L = \frac{\Delta s}{(n-1)x\alpha},$$

wherein

$\Delta s$ represents the jitter data, n represents a refractive index of any wedge-shaped lens, $\alpha$ represents an included angle between a vertical plane and an inclined plane of any wedge-shaped lens, and L represents the spacing between the two wedge-shaped lenses; and
the determining module is configured to determine the rotation angle and the rotation direction based on the jitter direction.

$$L = \frac{\Delta s}{(n-1)x\alpha},$$

FIG. 1

FIG. 2

FIG. 3

FIG. 4

FIG. 5

FIG. 6

FIG. 7

Planar lens

Actuator

FIG. 8

Third fastening frame

Second protrusion component

First rotation frame

Second rotation frame

First protrusion component

Y

X

Z

FIG. 9

Planar lens

Actuator

Y

X

Z

FIG. 10

FIG. 11

FIG. 12

FIG. 13

FIG. 14

FIG. 15

FIG. 16

FIG. 17

X axis first coil

X axis first magnet

Second frame

Moving shaft

X axis second magnet

X axis second coil

Third frame

Rotating bearing

First frame

Second wedge-shaped lens

First wedge-shaped lens

Z
Y
X

FIG. 18

FIG. 19

FIG. 20

Obtain jitter data and a jitter direction of a shooting apparatus  2101

Determine target adjustment data of an anti-jitter element based on the jitter data and the jitter direction|  2102

Control, based on the target adjustment data, an anti-jitter element adjustment apparatus to drive the anti-jitter element to change a pose, to complete shooting  2103

FIG. 21

Static

A

Image plane

A

Jitter

A

Image plane

A

A

Y
X
Z

FIG. 22

FIG. 23

FIG. 24

FIG. 25

FIG. 26

Instruction input → Calculation element → Execution element → Controlled object → Output

Measurement and feedback components

**FIG. 27**

Lens module (lens Module)

Hall signal (Hall Signal)

Hall sensor (Hall sensor) ← Anti-jitter element

Bias current (Bias Current)

Hall amplifier (Hall Amplifier) → Analog-to-digital conversion (AD Conventer) → Servo system filter (Servo Filter) → Anti-jitter element adjustment apparatus

Gyroscope signal (Gyro Signal)

Gyroscope filter (Gyro Filter)

Optical image stabilization (OIS) system

Gyroscope (Gyro Sensor)

**FIG. 28**

Shooting adjustment element

Obtaining module — 2901

Determining module — 2902

Control module — 2903

FIG. 29

## INTERNATIONAL SEARCH REPORT

| International application No. |
| --- |
| **PCT/CN2020/081851** |

**A.    CLASSIFICATION OF SUBJECT MATTER**

H04N 5/225(2006.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNKI; CNTXT; VEN; WOTXT; USTXT; 3GPP: 摄像, 成像, 补偿, 抖动, camera, offset, vibration, comoensate

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 110933266 A (HUAWEI TECHNOLOGIES CO., LTD.) 27 March 2020 (2020-03-27) claims 1-20 | 1-20 |
| A | CN 101546090 A (HONGFUJIN PRECISION INDUSTRY (SHENZHEN) CO., LTD. et al.) 30 September 2009 (2009-09-30) description, page 2 line 7 to page 3 line 25 | 1-20 |
| A | CN 107888834 A (TRULY OPTO-ELECTRONICS LTD.) 06 April 2018 (2018-04-06) entire document | 1-20 |
| A | CN 206339750 U (AAC TECHNOLOGIES (SINGAPORE) CO., LTD.) 18 July 2017 (2017-07-18) entire document | 1-20 |
| A | CN 208572247 U (NINGBO SUNNY OPTICAL TECHNOLOGY COMPANY LIMITED) 01 March 2019 (2019-03-01) entire document | 1-20 |
| A | US 2009160962 A1 (SANYO ELECTRIC CO., LTD. et al.) 25 June 2009 (2009-06-25) entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 May 2020** | **19 May 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/081851**

| Patent document cited in search report | | | Publication date (day/month/year) | Patent family member(s) | | | Publication date (day/month/year) |
|---|---|---|---|---|---|---|---|
| CN | 110933266 | A | 27 March 2020 | None | | | |
| CN | 101546090 | A | 30 September 2009 | JP | 2009237535 | A | 15 October 2009 |
| | | | | CN | 101546090 | B | 28 September 2011 |
| | | | | JP | 4843015 | B2 | 21 December 2011 |
| | | | | US | 2009244302 | A1 | 01 October 2009 |
| CN | 107888834 | A | 06 April 2018 | None | | | |
| CN | 206339750 | U | 18 July 2017 | None | | | |
| CN | 208572247 | U | 01 March 2019 | None | | | |
| US | 2009160962 | A1 | 25 June 2009 | JP | 2009156946 | A | 16 July 2009 |
| | | | | KR | 20090069216 | A | 30 June 2009 |
| | | | | CN | 101470313 | B | 02 March 2011 |
| | | | | KR | 100990265 | B1 | 26 October 2010 |
| | | | | CN | 101470313 | A | 01 July 2009 |

Form PCT/ISA/210 (patent family annex) (January 2015)